(19) Europäisches Patentamt

European Patent Office

Office européen des brevets

(11) **EP 1 208 968 A1**

(12) **EUROPEAN PATENT APPLICATION**

(43) Date of publication:
**29.05.2002 Bulletin 2002/22**

(51) Int Cl.$^7$: **B32B 27/28**, C08J 5/18, B29C 55/02

(21) Application number: **01127390.1**

(22) Date of filing: **22.11.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Higuchi, Yoshiaki**<br>  **Kanagawa-ku, Yokohama-shi, Kanagawa (JP)**<br>• **Jitsugiri, Yukio**<br>  **Yokosuka-shi, Kanagawa (JP)** |
| (30) Priority: **28.11.2000 JP 2000360678**<br>          **25.09.2001 JP 2001290907** | (74) Representative: **Müller-Boré & Partner**<br>**Patentanwälte**<br>**Grafinger Strasse 2**<br>**81671 München (DE)** |
| (71) Applicant: **Asahi Glass Co., Ltd.**<br>**Tokyo 100-8405 (JP)** | |

(54) **Ethylene-Tetrafluoroethylene and tetrafluoroethylene-hexafluoropropylene copolymer films excellent in light transparency**

(57)    An ethylene-tetrafluoroethylene copolymer film excellent in light transparency, which has a light transmittance of at least 90% at a wavelength of 300 nm when the film has a thickness of 25 μm.

A tetrafluoroethylene-hexafluoropropylene copolymer film excellent in light transparency, which has a light transmittance of at least 90% at a wavelength of 250 nm when the film has a thickness of 25 μm.

**EP 1 208 968 A1**

**Description**

The present invention relates to ethylene-tetrafluoroethylene copolymer and tetrafluoroethylene-hexafluoropropylene copolymer films excellent in transparency, particularly having a remarkably improved light transmittance at the ultraviolet region of from 200 to 300 nm.

An ethylene-tetrafluoroethylene copolymer (hereinafter referred to as ETFE) film and a tetrafluoroethylene-hexafluoropropylene copolymer (hereinafter referred to as FEP) film are films having excellent physical properties which other films do not have, from such a viewpoint that they basically have physical and chemical properties such as heat resistance, weather resistance, chemical resistance and noncohesive properties in a well-balanced manner. Accordingly, they are useful in wide fields of e.g. film materials for lamination, film materials for adhesive tapes, agricultural covering materials for tunnel houses and pipe houses, electrical insulating films and heavy-duty packaging films, making use of these properties.

Further, the ETFE film and the FEP film further have such optical properties that e.g. the light transmittance to natural light is usually high, and accordingly they are useful also as agricultural covering films, dust-proof films for e.g. photomasks and covering films for solar batteries, making use of these properties. Namely, in a case of growing in a greenhouse wherein the ETFE film or the FEP film is used for an agricultural covering film, since the film well transmits natural light into the inside of the greenhouse, solid crops which have undergone active photosynthesis grow, and cultivation of flower and highly-pigmented vegetables which require ultraviolet rays such as eggplants and breeding by pollination by means of insects such as bees which sense ultraviolet rays become possible in the inside of the greenhouse.

On the other hand, the ETFE film and the FEP film transmit light at the ultraviolet region, and accordingly they are useful also as a dust-proof film (pellicle) to prevent foreign substances from attaching to a photomask (reticle) in lithography step which employs a stepper in LSI production procedure, and the ETFE film and the FEP film are suitably used, which have a high transmittance to a short wave exposure light source such as g-line (wavelength: 436 nm) or i-line (wavelength: 365 nm).

Further, the ETFE film and the FEP film which have a high transparency to natural light in addition to weather resistance are useful also as a front covering film (protective film) for photoelectrical conversion element module of e. g. crystalline silicon and amorphous silicon solar batteries, since natural light having a wide range of wavelength from the ultraviolet region to the visible light region is not substantially shut off and can be taken into the inside of the module, whereby the photoelectrical conversion efficiency of the module can be maintained high.

It is an object of the present invention to increase the above-described optical properties, particularly transparency, of the ETFE film and the FEP film to a high level which has not conventionally been achieved. It is expected that higher effects in the above-described application fields can be achieved when such a high level of optical properties can be realized. For example, when the exposure light source in lithography step shifts to KrF excimer laser (248 nm) having a shorter wavelength, the ETFE film and the FEP film which have a high light transmittance are expected to be useful as a dust-proof film, and it is further expected that the application of the ETFE film and the FEP film is newly widened to an industrial field in which a higher transparency of films is required, in addition to the above-described various excellent properties.

Conventionally, as one of ordinary methods to improve optical properties of resin films such as refractive index and glossiness, stretching may be mentioned. This is to orientate molecular chains or microcrystals by monoaxially or biaxially stretching the film to improve optical properties, and is widely used in a field of various industrial films. Though it is expected to improve such optical properties in a field of fluororesin films, according to these poor stretchability, only polyvinylidene fluoride film is conducted practically as industrial stretching of a fluororesin film in fact.

The present inventors have conducted studies in detail from such a viewpoint and as a result, found that it is certain that a raw fabric of the fluororesin film basically has a poor stretchability, and if it is stretched as it is (hereinafter sometimes referred to as single stretching), it is not necessarily stretched uniformly even though it is barely stretched, and in the case of the ETFE film and the FEP film for example, well-balanced improvement of optical properties of the film as a whole can never be achieved.

The present inventors have found that by sandwiching the ETFE film or the FEP film between easily-stretchable films which are easily stretched by themselves to obtain a laminated film and stretching the laminated film so that the easily-stretchable films forming outer layers are mainly stretched, not by stretching the ETFE film or the FEP film by itself, the ETFE film or the FEP film as a core layer to be stretched is pulled and forcibly stretched and as a result, the film is uniformly stretched.

It is an object of the present invention to provide novel ETFE film and FEP film having optical properties such as light transmittance remarkably improved while maintaining various excellent properties such as weather resistance and heat resistance, prepared based on the above-described new stretching principle (hereinafter sometimes referred to as assist method).

The present invention has been made to overcome the above-described problems, and according to the present invention, the following ETFE film and FEP film excellent in light transparency can be provided.

The present invention provides an ETFE film excellent in light transparency, which has a light transmittance of at least 90% at a wavelength of 300 nm when the film has a thickness of 25 $\mu$m.

The present invention further provides a FEP film excellent in light transparency, which has a light transmittance of at least 90% at a wavelength of 250 nm when the film has a thickness of 25 $\mu$m.

Now, the present invention will be described in detail with reference to the preferred embodiments.

In the accompanying drawings:

Fig. 1 is a diagram illustrating one example of stretching process of the present invention as a model.

Fig. 2 is a graph illustrating the light transmittance of ETFE films.

Fig. 3 is a graph illustrating the light transmittance of FEP films.

ETFE to be used for the ETFE film of the present invention is a copolymer having a molar ratio of polymerized units based on tetrafluoroethylene (hereinafter referred to as TFE)/ethylene of preferably from 70/30 to 30/70, more preferably from 65/35 to 40/60, most preferably from 60/40 to 40/60.

Further, FEP to be used for the FEP film of the present invention is a copolymer having a molar ratio of polymerized units based on TFE/hexafluoropropylene of preferably from 98/2 to 50/50, more preferably from 95/15 to 60/40, most preferably from 90/10 to 75/25.

ETFE and FEP may contain a small amount of polymerized units based on a copolymerizable monomer in addition to TFE and ethylene, and in addition to TFE and hexafluoropropylene, respectively. Examples of such a copolymerizable monomer include fluoroethylenes except for TFE, such as $CF_2=CFCl$ and $CF_2=CH_2$; fluoropropylenes such as $CF_2=CFCF_3$ and $CF_2=CHCF_3$; (perfluoroalkyl)ethylenes having a $C_{4-12}$ fluoroalkyl group such as $CF_3CF_2CF_2CF_2CH=CH_2$ and $CF_3CF_2CF_2CF_2CF=CH_2$; perfluorovinyl ethers such as $R^f(OCFXCF_2)_mOCF=CF_2$ (wherein $R^f$ is a $C_{1-6}$ perfluoroalkyl group, X is a fluorine atom or a trifluoromethyl group, and m is an integer of from 0 to 5); perfluorovinyl ethers having a group which can easily be converted into a carboxylic acid group or a sulfonic group, such as $CH_3OC(=O)CF_2CF_2CF_2OCF=CF_2$ and $FSO_2CF_2CF_2OCF(CF_3)CF_2OCF=CF_2$ ; and olefins except for ethylene, such as propylene and isobutylene. Such copolymerizable monomers may be used alone or in combination as a mixture of two or more of them.

The content of polymerized units based on such a copolymerizable monomer is preferably at most 30 mol%, more preferably from 0.1 to 15 mol%, most preferably from 0.2 to 10 mol%, usually based on the entire polymerized units of ETFE or FEP.

The ETFE film and the FEP film excellent in light transparency of the present invention (hereinafter will generically be referred to as "ETFE film or the like" in some cases) are obtained by firstly forming a raw fabric film from the above-defined ETFE and FEP, respectively, followed by stretching under specific conditions.

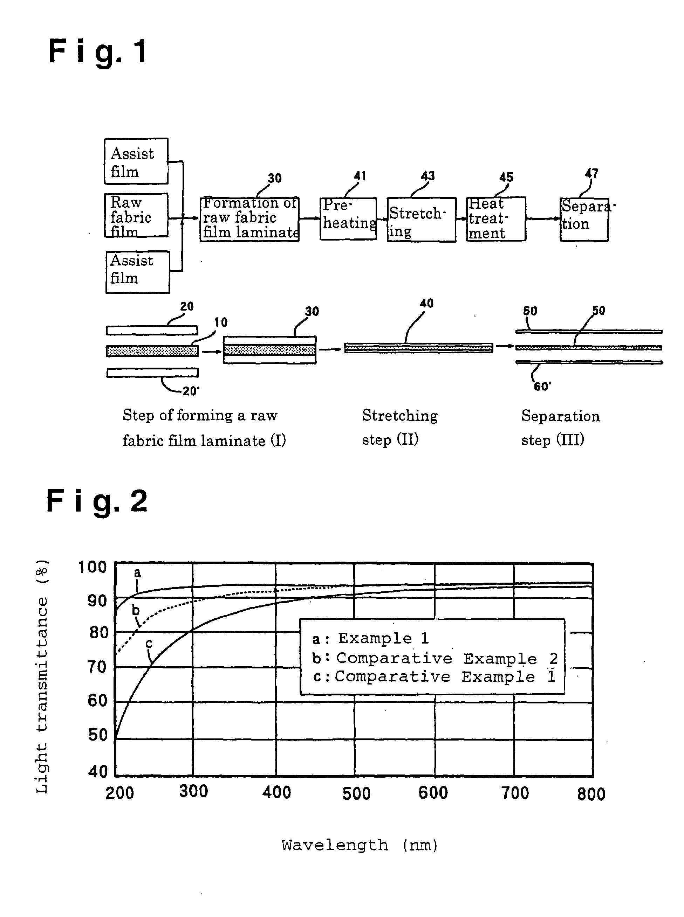

Now, this stretching process will be explained below with reference to a drawing. Fig. 1 is a diagram illustrating one example of the stretching process as a model, and the stretching process consists mainly of step (I) of forming a laminate of a raw fabric film and an assist film, step (II) of stretching the laminate, and step (III) of separating the assist film after the stretching. Here, each of the reference numerals designates the following film, laminate or step. 10: raw fabric film, 20, 20': assist film, 30: raw fabric film laminate, 40: film laminate after stretching, 41: preheating step, 43: stretching step, 45 : heat treatment step, 47: step of separating the assist film, 50: ETFE film or the like after stretching, 60, 60': assist film after stretching.

Now, step (I) will be explained below.

Step (I) is a step of laminating an assist film 20, 20' to assist stretching on at least one side, preferably each side, of a raw fabric film 10 to form a raw fabric film/assist film laminate 30 (hereinafter referred to as raw fabric film laminate).

Here, as a layer structure of the raw fabric film laminate, more commonly the following structures may be selected, wherein the raw fabric film is represented by "T", "T' ", "T''", ⋯ and the assist film is represented by "A".

(1) T/A or A/T   (two layers)

(2) T/A/T   (three layers)

(3) A/T/A   (three layers)

(4) A(T/A/T/A ⋯ T/A)   (multiple layers comprising repetition of T/A)

(5) T(A/T/A/T ⋯ A/T)   (multiple layers comprising repetition of A/T)

(6) A/T/T'/T''/ ⋯ /A   (wherein T/T'/T''⋯ represents that the raw fabric film is multilayered raw fabric films of at least two layers)

In the case of (6), the raw fabric films T/T'/T''/ ⋯ are adequately bonded to such an extent that they are not easily separated at each interface between layers, and heat seal by means of e.g. hot pressing at a high temperature, lamination after activation treatment by corona discharge of the laminated surface or bonding by means of an adhesive may, for example, be employed.

Here, the thickness of the raw fabric film is usually at a level of from 80 to 1,000 μm, and the thickness of the assist film is at a level of from 50 to 600 μm, although they are not particularly limited.

The point is to form the raw fabric film laminate 30 prior to stretching, in order to obtain an ETFE laminated film excellent in light transparency, having a light transmittance of at least 90% at a wavelength of 300 nm when the film has a thickness of 25 μm and an FEP film excellent in light transparency, having a light transmittance of at least 90% at a wavelength of 250 nm when the film has a thickness of 25 μm, which are the objects of the present invention.

Namely, this laminate is different from an usual laminate, and it is not an object to form a laminated film as a final product wherein the assist films 20, 20' are firmly bonded or heat-sealed to the raw fabric film 10 as a core layer. The assist films laminated on the core layer have to be overlaid on the core layer with an interfacial adhesive force (or interfacial shear force) to a certain extent. Namely, they have to be bonded with a minimum force to such an extent that when the assist layers forming outer layers are held by rolls, guide rails or clips of a stretching machine and stretched in the successive stretching step, the core layer and the assist layers do not move independently by slippage at the interface between layers, and the raw fabric film as the core layer can be forcibly stretched by stretch of the assist layers as outer layers. Further, the assist films have to readily be separated from the core layer in the separation step after the stretching step, and accordingly excessive interfacial adhesive force which makes the separation difficult is unfavorable.

Formation of the raw fabric film laminate 30 may be carried out by various methods. For example, (1) heat lamination may be employed wherein the raw fabric film 10 of ETFE or FEP and the assist films 20, 20' prepared separately are overlaid one on another and contact-bonded by heating by means of a heat pressing machine or by passing the films through heated rolls. Further, (2) coextrusion lamination may be employed wherein ETFE or FEP and a resin to form the assist films are melted in a multilayer die and extruded as a laminated film. In the case of the multilayer die, the location of laminating the ETFE or FEP and the assist films may be in the inside of the die or on the outside of the die, and in the case of the former, the structure of the die may be single, manifold or multi-manifold. Further, (3) extrusion lamination may also be employed wherein the ETFE film or the like is preliminarily prepared, and on the film, a resin to form the assist films is extruded in the form of a film by an extruder, followed by contact bonding. Here, in the case of contact bonding by means of e.g. heat pressing, a suitable adhesive such as a hot melt adhesive may be interposed between layers to adjust adhesive force.

In the case of forming a laminated film by the above-mentioned methods, usually a surface treatment such as a corona discharge treatment is preliminarily carried out on the surface of a film as a substrate so as to increase adhesive force between layers. However, in the present invention, no such a pre-treatment is usually required since the assist films have to easily be separated from the raw fabric film laminate of the ETFE film or the like after stretching.

In the present invention, the resin to be used as the assist film is selected from resin films which can readily be stretched (more particularly, biaxially oriented for example) basically by themselves, and preferred are ones having a melting point (mp) or a glass transition point (Tg) lower than that of the ETFE film or the like as the core. Such a resin to be used as the assist film is not particularly limited, and examples of which include polyethylene terephthalate (PET), polypropylene (PP), polyethylene (PE), polycarbonate (PC), nylon 6 (PA6), nylon 66 (PA66), polystyrene (PS), poly α-methylstyrene (PαMS), polyacrylonitrile (PAN), polyvinyl chloride (PVC), polyvinyl acetate (PVAC), polybutene (PB), chlorinated polyethylene (CPE), ethylene vinyl chloride copolymer (EVC), ethylene vinyl acetate copolymer (EVA), polymethyl methacrylate (PMMA) and polyvinyl alcohol (PVAL). Among them, preferred are PET, PP, PE, PC and PA6. The assist film formed from such a resin is preferably a non-stretched film.

Step (II) is a stretching step of stretching the raw fabric film laminate formed in step (I) as mentioned above.

The stretching step mainly comprises preheating 41 to a stretching temperature, stretching 43 and thermal fixation (stabilization) by heat treatment 45 of the raw fabric film laminate 30 as illustrated in Fig. 1.

The raw fabric film laminate 30 is firstly preheated to a stretching temperature. The preheating temperature is usually a suitable temperature from the glass transition point to the melting point of a fluororesin film as the raw fabric and the assist film to be combined therewith. For example, in a case where a PET film is used as the assist film for the ETFE film or the like as the raw fabric, the preheating temperature is at a level of from 80 to 120°C. Here, preheating may be carried out by contacting the raw fabric film laminated to heated rolls, or may be carried out by hot air or by irradiation with infrared rays.

In the present invention, stretching means biaxial orientation, and it may be carried out by a known method and is not particularly limited, but it is preferably simultaneous biaxial orientation or sequential biaxial orientation, most preferably simultaneous biaxial orientation.

In the simultaneous biaxial orientation, longitudinal stretching (stretching in a direction of movement of films (MD direction)) and lateral stretching (stretching in a direction perpendicular to the direction of movement of films (TD direction)) are simultaneously carried out, and an apparatus which is slightly different in mechanism from sequential biaxial orientation which will be mentioned hereinafter, is used. Namely, basically, stretching in a lateral direction is carried out by moving the raw fabric film laminate by guide rails and opening the guide rails by a tenter which is disposed in a predetermined form, and at the same time, stretching in a longitudinal direction is carried out by means of clips of e.g. pantagraph mechanism which open the space in a longitudinal direction.

On the other hand, in the sequential biaxial orientation, usually longitudinal stretching is carried out first, and then lateral stretching is carried out. A typical means of the longitudinal stretching is to use stretching rolls, and a revolving roll with low peripheral velocity is disposed upstream and a revolving roll with high peripheral velocity is disposed downstream, and the preheated raw fabric film laminate is passed through these rolls so that tension is applied to the film in the direction of movement utilizing the difference in peripheral velocity between these rolls, to stretch the film in a longitudinal direction. Then, in the lateral stretching, basically, the film is stretched in a lateral direction by a tenter similar to one as mentioned above. In the case of the sequential biaxial orientation, formation of the raw fabric film laminate by laminating the assist films on the raw fabric film is carried out basically prior to the first stage stretching (longitudinal stretching), but it may be carried out prior to the second stage stretching (lateral stretching) as the case requires. For example, in a case where it is attempted to form a thin ETFE film at a level of at most 10 µm, in the first stage stretching, the raw fabric film alone may be stretched by itself, and the raw fabric film laminate having assist films overlaid thereon may be stretched only in the second stage stretching, in order that the assist films after the stretching can easily be separated. This is based on results of the experiment conducted by the present inventors that the ETFE film or the like may be stretched relatively easily and stably practically without the assist film in the case of monoaxial orientation.

Here, the stretching is not limited to the above-mentioned so-called flat stretching, and stretching by means of blown-film extrusion combined with a circular die may also be employed.

The draw ratio may vary depending upon the thickness or type of the raw fabric film or the assist film, optical properties of the film to be obtained or the like, and is usually from 2 to 15 times in a longitudinal direction and from 2 to 15 times in a lateral direction, preferably from 2 to 6 times in a longitudinal direction and from 2 to 6 times in a lateral direction.

It is also preferred to subject the raw fabric film laminate thus stretched to a heat treatment at a temperature higher than the stretching temperature so as to decrease the residual stress to improve dimensional stability.

As the heat treatment temperature, usually preferred is a temperature within a range of from not higher than the melting point of the ETFE film or the like to be treated to the stretching temperature, more preferred is a temperature within a range of from a temperature lower by about 10°C than the melting point to a temperature higher by 20°C than the stretching temperature. Further, the heat treatment time is preferably from 0.1 to 60 minutes. For example, it is preferred to carry out a heat treatment at from 200 to 140°C for from 0.2 to 10 minutes.

Finally in step (III), (stretched) assist films 60, 60' are separated to obtain an ETFE film of the present invention excellent in light transparency, having a light transmittance of at least 90% at a wavelength of 300 nm when the film has a thickness of 25 µm. This film is preferably an ETFE film having a light transmittance of at least 88% at a wavelength of 250 nm when the film has a thickness of 25 µm.

Similarly, an FEP film of the present invention excellent in light transparency, which has a light transmittance of at least 90% at a wavelength of 250 nm when the film has a thickness of 25 µm can be obtained. This film is preferably an FEP film having a light transmittance of at least 93% at a wavelength of 300 nm when the film has a thickness of 25 µm.

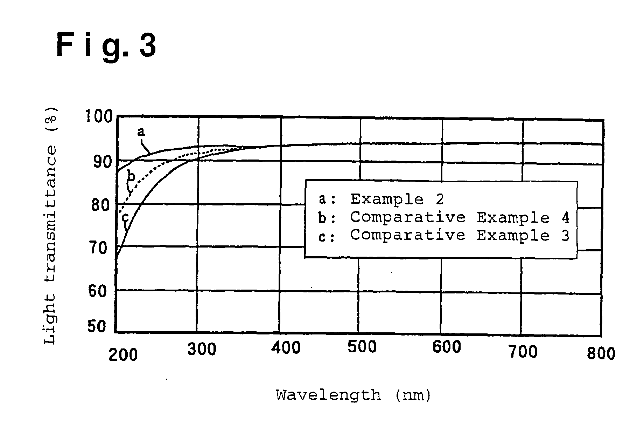

Fig. 2 and Fig. 3 illustrate results of Examples which will be mentioned hereinafter, and $\underline{a}$ in the drawings is a graph illustrating light transmittance of the ETFE film or the FEP film excellent in light transparency, which satisfies essentialities of the present invention. Further, $\underline{b}$ is a graph illustrating light transmittance of a monoaxially oriented ETFE film or the like, and $\underline{c}$ is a graph illustrating light transmittance of a non-stretched ETFE film or the like.

The thickness of the ETFE film or the like of the present invention after the stretching is at a level of from 1 to 100 µm.

The light transmittance as defined in the present invention is a value when the film has a thickness of 25 µm, and in a case of a film having a thickness other than 25 µm, a measured value is converted by a formula (1) in accordance with Beer's law.

$$\log_{10}(I_0/I)=K\times L \tag{1}$$

$I_0$:     Intensity of incident light
I:     Intensity of light after transmitted through the film
L:     Thickness (µm) of the film
K:     Constant

The ETFE film and FEP film of the present invention are films having remarkably improved light transmittance while maintaining excellent physical and chemical properties of ETFE and FEP themselves, such as heat resistance, light resistance and chemical resistance. Accordingly, they are useful particularly for agricultural covering films, dust-proof films for e.g. photomasks, covering films for solar batteries, and film materials for lamination (such as wall paper and desktop mat).

Now, the present invention will be explained in further detail with reference to Examples and Comparative Examples. However, it should be understood that the present invention is by no means restricted to such specific Examples.

EXAMPLE 1

(1) ETFE (AFLON COP (registered trademark) C-88AX, manufactured by Asahi Glass Company, Limited) having a melt index (MI) value of 3.8 at 300°C was extruded by means of a monoaxial extrusion molding machine (VS40, manufactured by Ikegai Corporation) having an aperture of 40 mm using a flat die having a gap width of 700 mm at a dice temperature of 330°C at an extrusion rate of 7.5 kg/h to obtain an extruded product. The extruded product was taken up at a rate of 0.55 m/min along a roll adjusted to have a surface temperature of 130°C to obtain a raw fabric film of ETFE having a thickness of 203 μm.

(2) The obtained film (hereinafter referred to as ETFE raw fabric film) was subjected to biaxial orientation by the following method to obtain a sample for light transmittance test.

(a) Firstly, a non-stretched polyester film (A-PET FR-1, manufactured by Teijin Limited) of 210 μm as a film to assist stretching was overlaid on and below the ETFE raw fabric film of 203 μm to obtain a three-ply film. Then, a pair of a metal roll and a roll covered with rubber in a thickness of 10 mm was adjusted to have a surface temperature of 85°C, then the three-ply film was pressurized by the pair of rolls under a pressure of 40 kg/cm as calculated as the width of the film and laminated at a rate of 10 cm/min to obtain a three-layer laminated film. The obtained three-layer laminated film (raw fabric film laminate) was cut into 90 mm square to obtain a sample for stretching.

(b) This sample of the raw fabric film laminate was subjected to simultaneous biaxial orientation by means of a biaxial orientation testing apparatus (biaxial orientation testing apparatus × 6H, manufactured by Toyo Seiki Seisaku-sho, Ltd.) at a temperature of 88°C with a preheating of 3 minutes at a stretch rate of 2 m/min three times in both longitudinal and lateral directions relative to the dimension of the sample before the stretching to obtain a biaxially oriented film. The obtained biaxially oriented film was air cooled under tension until the surface temperature became at most 40°C and then taken out. Then, A-PET as the assist film laminated on and below the raw fabric film was separated to obtain a biaxially oriented ETFE film. The thickness of the biaxially oriented ETFE film was 26 μm.

(c) Light transmittance of the obtained biaxially oriented ETFE film was measured by means of a light transmissonmeter (spectrophotometer UV-3100, manufactured by Shimadzu Corporation) within a range of from 200 to 800 nm (the measured value was calculated as a thickness of the film of 25 μm according to the formula (1)). The results are shown in Fig. 2(a) and Table 1.

COMPARATIVE EXAMPLE 1

A non-stretched ETFE film having a thickness of 25 μm was obtained in the same manner as in Example 1 except that the rate of the roll to take up the extruded product was 4.76 m/min. The light transmittance was measured in the same manner as in Example 1 and the results are shown in Fig. 2(c) and Table 1.

COMPARATIVE EXAMPLE 2

A non-stretched ETFE film having a thickness of 98 μm was obtained in the same manner as in Example 1 except that the rate of the roll to take up the extruded product was 1.12 m/min. A three-layer laminate was obtained in the same manner as in Example 1 using the obtained ETFE film and stretched 4.8 times in a longitudinal direction (MD direction) in a state where it was held so that the dimension in a lateral direction (TD direction) would not change by using the same stretching apparatus, and the obtained stretched film was air cooled under tension until the surface temperature became at most 40°C and then taken out. Then, A-PET laminated on and below the raw fabric film was separated to obtain a monoaxially oriented ETFE film. The thickness of the monoaxially oriented ETFE film was 26 μm. The light transmittance of the monoaxially oriented film was measured in the same manner as in Example 1 and the results are shown in Fig. 2(b) and Table 1.

Table 1

|  | Example 1 (a) | Comparative Example 1 (c) | Comparative Example 2 (b) |
|---|---|---|---|
| Light transmittance at 300 nm (%) | 92 | 80 | 89 |
| Light transmittance at 250 nm (%) | 90 | 71 | 83 |

EXAMPLE 2

(1) Tetrafluoroethylene-hexafluoropropylene copolymer (FEP; manufactured by Daikin Industries, Ltd.) was extruded by means of a monoaxial extrusion molding machine (VS40, manufactured by Ikegai Corporation) having an aperture of 40 mm using a flat die having a gap width of 700 mm at a dies temperature of 360°C at an extrusion rate of 4.5 kg/h to obtain an extruded product. The extruded product was taken up at a rate of 0.53 m/min along a roll adjusted to have a surface temperature of 120°C to obtain an FEP raw fabric film having a thickness of 101 μm.
(2) The obtained FEP raw fabric film was subjected to biaxial orientation by the following method to obtain a sample for light transmittance test.

(a) Firstly, a non-stretched polyester film (A-PET FR-1, manufactured by Teijin Limited) of 210 μm as a film to assist stretching was overlaid on and below the FEP raw fabric film of 101 μm to obtain a three-ply film. Then, a pair of a metal roll and a roll covered with rubber in a thickness of 10 mm was adjusted to have a surface temperature of 85°C, then the three-ply film was pressurized by the pair of rolls under a pressure of 40 kg/cm as calculated as the width of the film and laminated at a rate of 10 cm/min to obtain a three-layer laminated film. The obtained three-layer laminated film (raw fabric film laminate) was cut into 90 mm square to obtain a sample for stretching.
(b) This sample of the raw fabric film laminate was subjected to simultaneous biaxial orientation by means of a biaxial orientation testing apparatus (biaxial orientation testing apparatus × 6H, manufactured by Toyo Seiki Seisaku-sho, Ltd.) at a temperature of 90°C with a preheating of 3 minutes at a stretch rate of 0.8 m/min twice in both longitudinal and lateral directions relative to the dimension of the sample before the stretching to obtain a biaxially oriented film. The obtained biaxially oriented film was air cooled under tension until the surface temperature became at most 40°C and then taken out. Then, A-PET as the assist film laminated on and below the raw fabric film was separated to obtain a biaxially oriented FEP film. The thickness of the biaxially oriented FEP film was 27 μm.
(c) Light transmittance of the obtained biaxially oriented FEP film was measured by means of a light transmissonmeter (spectrophotometer UV-3100, manufactured by Shimadzu Corporation) within a range of from 200 to 800 nm (the measured value was calculated as a thickness of the film of 25 μm according to the formula (1)). The results are shown in Fig. 3(a) and Table 2.

COMPARATIVE EXAMPLE 3

A non-stretched FEP film having a thickness of 25 μm was obtained in the same manner as in Example 2 except that the rate of the roll to take up the extruded product was 2.21 m/min. The light transmittance was measured in the same manner as in Example 2 and the results are shown in Fig. 3(c) and Table 2.

COMPARATIVE EXAMPLE 4

A non-stretched FEP film having a thickness of 76 μm was obtained in the same manner as in Example 2 except that the rate of the roll to take up the extruded product was 0.91 m/min. A three-layer laminate was obtained in the same manner as in Example 2 using the obtained FEP film and stretched three times in a longitudinal direction (MD direction) in a state where it was held so that the dimension in a lateral direction (TD direction) would not change by using the same stretching apparatus, and the obtained stretched film was air cooled, then A-PET laminated on and below the raw fabric film was separated to obtain a monoaxially oriented FEP film. The thickness of the monoaxially oriented FEP film was 26 μm. The light transmittance of the monoaxially oriented film was measured in the same manner as in Example 2 (the measured value was calculated as a thickness of the film of 25 μm according to the formula (1)) and the results are shown in Fig. 3(b) and Table 2.

Table 2

| | Example 2 (a) | Comparative Example 3 (c) | Comparative Example 4 (b) |
|---|---|---|---|
| Light transmittance at 300 nm (%) | 93 | 90.5 | 92 |
| Light transmittance at 250 nm (%) | 92 | 84 | 89 |

As evident from Fig. 2 and Table 1, the biaxially oriented ETFE film (graph a) obtained in Example 1 has a light transmittance of at least 90% at a wavelength of 300 nm, and is a novel ETFE film which satisfies essentialities as defined in the present invention. It is found that the biaxially oriented ETFE film of Example 1 has a remarkably improved light transmittance and has a significantly high transmittance at a short wavelength range of from 200 to 400 nm, particularly from 200 to 300 nm, as compared with the non-stretched film of Comparative Example 1 (graph c). This light transmittance of at least 90% at 300 nm is a high level which has not been achieved by a conventional ETFE film. Further, the monoaxially oriented film of Comparative Example 2 (graph b) has a relatively high light transmittance as compared with a raw fabric film, but the transmittance at 300 nm is not higher than 90%.

Further, as evident from Fig. 3 and Table 2, the biaxially oriented FEP film obtained in Example 2 (graph a) has a light transmittance of at least 90% at a wavelength of 250 nm, and is a novel FEP film which satisfies essentialities as defined in the present invention. It is found that the biaxially oriented FEP film of Example 2 has a remarkably improved light transmittance and has a significantly high transmittance at a short wavelength range of from 200 to 400 nm, particularly from 200 to 300 nm, as compared with the non-stretched film of Comparative Example 3 (graph c). This light transmittance of at least 90% at 250 nm is a high level which has not been achieved by a conventional FEP film. Further, the monoaxially oriented film of Comparative Example 4 (graph b) has a relatively high light transmittance as compared with a raw fabric film, but the transmittance is not higher than 90% at 250 nm.

Here, if the draw ratio was increased and when the draw ratio was 12 times for example, the light transmittance no longer increased and rather tended to decrease.

The entire disclosures of Japanese Patent Application No. 2000-360678 filed on November 28, 2000 and Japanese Patent Application No. 2001-290907 filed on September 25, 2001 including specifications, claims, drawings and summaries are incorporated herein by reference in their entireties.

## Claims

1.    An ethylene-tetrafluoroethylene copolymer film excellent in light transparency, which has a light transmittance of at least 90% at a wavelength of 300 nm when the film has a thickness of 25 μm.

2.    The ethylene-tetrafluoroethylene copolymer film according to Claim 1, which has a light transmittance of at least 88% at a wavelength of 250 nm when the film has a thickness of 25 μm.

3.    A tetrafluoroethylene-hexafluoropropylene copolymer film excellent in light transparency, which has a light transmittance of at least 90% at a wavelength of 250 nm when the film has a thickness of 25 μm.

4.    The tetrafluoroethylene-hexafluoropropylene copolymer film according to Claim 3, which has a light transmittance of at least 93% at a wavelength of 300 nm when the film has a thickness of 25 μm.

5.    The film according to any one of Claims 1 to 4, which is a biaxially oriented film.

6.    The film according to Claim 5, wherein the biaxially oriented film is a film obtained by biaxial orientation by a method comprising step (I) of forming a laminate of a raw fabric film and an assist film, step (II) of stretching the laminate and step (III) of separating the assist film after the stretching.

7.    The film according to Claim 6, wherein the laminate of a raw fabric film and an assist film is formed by heat lamination in such a manner that the raw fabric film and the assist film are overlaid and contact-bonded by heating by means of a heat pressing machine or by passing the films through heated rolls.

8.    The film according to Claim 6 or 7, wherein the laminate of a raw fabric film and an assist film has a three-layer structure of assist film/raw fabric film/assist film.

9.  The film according to any one of Claims 6 to 8, wherein the assist film is of polyethylene terephthalate, polypropylene, polyethylene, polycarbonate or nylon 6.

10. The film according to any one of Claims 6 to 9, wherein in step (II), the draw ratio of the laminate of a raw fabric film and an assist film is from 2 to 12 times in a longitudinal direction and from 2 to 12 times in a lateral direction.

11. The film according to any one of Claims 6 to 10, wherein in step (II), the draw ratio of the laminate of a raw fabric film and an assist film is from 2 to 6 times in a longitudinal direction and from 2 to 6 times in a lateral direction.

12. The film according to Claim 1 or 2, wherein the ethylene-tetrafluoroethylene copolymer is a copolymer of tetrafluoroethylene, ethylene and a (perfluoroalkyl)ethylene having a $C_{4-12}$ perfluoroalkyl group, the molar ratio of polymerized units based on tetrafluoroethylene/ethylene is from 70/30 to 30/70, and the content of polymerized units based on the (perfluoroalkyl)ethylene having a $C_{4-12}$ perfluoroalkyl group is at most 30 mol% based on the entire polymerized units of the ethylene-tetrafluoroethylene copolymer.

13. The film according to Claim 12, wherein the content of polymerized units based on the (perfluoroalkyl)ethylene having a $C_{4-12}$ perfluoroalkyl group is from 0.1 to 15 mol% based on the entire polymerized units of the ethylene-tetrafluoroethylene copolymer.

14. The film according to Claim 3 or 4, wherein the tetrafluoroethylene-hexafluoropropylene copolymer is a copolymer having a molar ratio of polymerized units based on tetrafluoroethylene/hexafluoropropylene of from 98/2 to 50/50.

# Fig. 1

```
┌─────────┐
│ Assist  │
│ film    │
└─────────┘
┌─────────┐     ┌──────────────┐ 30  ┌──────────┐ 41  ┌──────────┐ 43  ┌──────────┐ 45  ┌──────────┐ 47
│ Raw     │     │Formation of  │     │Pre-      │     │Stretch-  │     │Heat      │     │Separa-   │
│ fabric  │ ──► │raw fabric    │ ──► │heating   │ ──► │ing       │ ──► │treat-    │ ──► │tion      │
│ film    │     │film laminate │     │          │     │          │     │ment      │     │          │
└─────────┘     └──────────────┘     └──────────┘     └──────────┘     └──────────┘     └──────────┘
┌─────────┐
│ Assist  │
│ film    │
└─────────┘
```

Step of forming a raw          Stretching          Separation
fabric film laminate (I)       step (II)           step (III)

# Fig. 2

a : Example 1
b : Comparative Example 2
c : Comparative Example 1

Wavelength (nm)

10

# Fig. 3

a : Example 2
b : Comparative Example 4
c : Comparative Example 3

# EUROPEAN SEARCH REPORT

**European Patent Office**

**Application Number**

EP 01 12 7390

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DATABASE WPI<br>Section Ch, Week 198249<br>Derwent Publications Ltd., London, GB;<br>Class A32, AN 1982-05599J<br>XP002192138<br>& JP 57 176126 A (SEKISUI CHEM IND CO LTD)<br>, 29 October 1982 (1982-10-29)<br>* abstract * | 1,5,6,9 | B32B27/28<br>C08J5/18<br>B29C55/02 |
| A | DATABASE WPI<br>Section Ch, Week 198337<br>Derwent Publications Ltd., London, GB;<br>Class A18, AN 1983-762032<br>XP002192139<br>& JP 58 132520 A (TEIJIN LTD),<br>6 August 1983 (1983-08-06)<br>* abstract * | 5,6 | |
| A | US 5 348 794 A (TAKAHASHI TOMONORI ET AL)<br>20 September 1994 (1994-09-20)<br>* claim 1 * | 6 | |
| A | DATABASE WPI<br>Section Ch, Week 198704<br>Derwent Publications Ltd., London, GB;<br>Class A32, AN 1987-026596<br>XP002192140<br>& JP 61 284419 A (UNITIKA LTD),<br>15 December 1986 (1986-12-15)<br>* abstract * | 6 | TECHNICAL FIELDS SEARCHED (Int.Cl.7)<br><br>B32B<br>C08J<br>B29C |
| A | US 4 519 969 A (MURAKAMI KUNIO)<br>28 May 1985 (1985-05-28)<br>* claim 1 * | 1,5 | |

-/--

The present search report has been drawn up for all claims

| Place of search | Date of completion of the search | Examiner |
|---|---|---|
| THE HAGUE | 6 March 2002 | Hillebrand, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 01 12 7390

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DATABASE WPI<br>Section Ch, Week 198619<br>Derwent Publications Ltd., London, GB;<br>Class A14, AN 1986-123130<br>XP002192141<br>& JP 61 063433 A (UNITIKA LTD),<br>1 April 1986 (1986-04-01)<br>* abstract * | 1,5 | |
| A | DATABASE WPI<br>Section Ch, Week 199047<br>Derwent Publications Ltd., London, GB;<br>Class A14, AN 1990-351935<br>XP002192142<br>& JP 02 253924 A (UNITIKA LTD),<br>12 October 1990 (1990-10-12)<br>* abstract * | 1,5 | |
| | | | **TECHNICAL FIELDS SEARCHED** (Int.Cl.7) |

The present search report has been drawn up for all claims

| Place of search | Date of completion of the search | Examiner |
|---|---|---|
| THE HAGUE | 6 March 2002 | Hillebrand, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 01 12 7390

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2002

| Patent document cited in search report | | Publication date | Patent family member(s) | | Publication date |
|---|---|---|---|---|---|
| JP 57176126 | A | 29-10-1982 | NONE | | |
| JP 58132520 | A | 06-08-1983 | NONE | | |
| US 5348794 | A | 20-09-1994 | DE | 69125319 D1 | 30-04-1997 |
| | | | DE | 69125319 T2 | 30-10-1997 |
| | | | EP | 0465681 A1 | 15-01-1992 |
| | | | WO | 9111317 A1 | 08-08-1991 |
| JP 61284419 | A | 15-12-1986 | JP | 1796162 C | 28-10-1993 |
| | | | JP | 5003816 B | 18-01-1993 |
| US 4519969 | A | 28-05-1985 | JP | 1617280 C | 12-09-1991 |
| | | | JP | 2044706 B | 04-10-1990 |
| | | | JP | 60056532 A | 02-04-1985 |
| | | | DE | 3478931 D1 | 17-08-1989 |
| | | | EP | 0140546 A2 | 08-05-1985 |
| JP 61063433 | A | 01-04-1986 | JP | 1672587 C | 12-06-1992 |
| | | | JP | 3034457 B | 22-05-1991 |
| JP 2253924 | A | 12-10-1990 | NONE | | |